# EUROPEAN PATENT APPLICATION

(11) **EP 3 389 152 A1**
(43) Date of publication of application: **17.10.2018**
(21) Application number: 16872370.8
(22) Date of filing: 06.12.2016
(51) Int. Cl.: H01R 39/41

(54) **CARBON BRUSH CYLINDER AND MOTOR**

(30) Priority: 09.12.2015 CN 201521015615 U
(71) Applicant: Guangdong Zhaoqing L & V Co. Ltd, Zhaoqing, Guangdong 526238 (CN)
(72) Inventor: QIU, Xianghuai, Shenzhen Guangdong 518067 (CN)
(74) Representative: Banzer, Hans-Jörg
(86) International application number: PCT/CN2016/108680
(87) International publication number: WO 2017/097179

(57) **Abstract**

The embodiments of the present disclosure provide a carbon brush holder having internal surfaces which surround a space for bearing a carbon brush, wherein a heat dissipating slot is disposed at an internal corner of the carbon brush holder. The embodiments of the present disclosure further provide an electric motor. In the embodiments of the present disclosure, heat accumulated at the internal corners of the carbon brush holder can be dissipated rapidly because of the heat dissipating slots disposed at the internal corners, such that an excessively high temperature at the internal corners of the carbon brush holder is prevented and a risk of melting the plastics at the internal corners of the carbon brush holder is reduced, thereby increasing the life of the carbon brush holder and the carbon brush.

## Description

### CROSS-REFERENCE TO RELATED APPLICATION

This application claims priority from and claims the benefit of the Chinese patent application 201521015615.8 submitted on December 09, 2015, which is incorporated by reference herein as a part of the present application.

### TECHNICAL FIELD

The embodiments of the present disclosure relate to mechanical field, and in particular to a carbon brush holder and an electric motor.

### BACKGROUND ART

A carbon brush is means for transmitting energy or signal between a fixed part and a rotary part of an electric motor or other rotating machines. A carbon brush is usually made from pure carbon added with curing agent and in the form of a cube shape. Generally, the carbon brush is in contact with a commutator of the electric motor to serve as a slidable contact for conducting electric current. As an important part of an electric motor, carbon brushes are used in almost all the DC electric motors. Usually, a carbon brush holder is arranged by injection molding on a plastic end cap of a DC electric motor to bear the carbon brush.

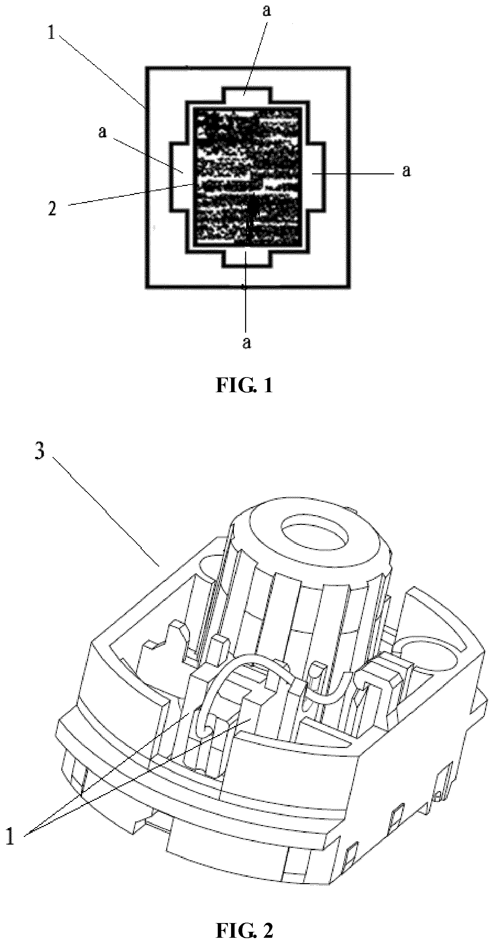

FIG. 1 shows a sectional view of a carbon brush holder in prior art, in which a heat dissipating slot *a* is disposed in the middle of four internal surfaces of the carbon brush holder 1 to space a certain distance from a carbon brush 2 to dissipate heat during working, while four internal corners of the carbon brush holder 1 are in direct contact with the carbon brush 2 to bear the carbon brush 2.

In prior art, however, the four internal corners of the carbon brush holder may have an increased temperature caused by sparkles due to direct contact with the carbon brush. As it is more difficult to dissipate heat accumulated at the four internal corners of the carbon brush holder than the heat accumulated in the middle of the internal surfaces, the temperature at the internal corners are too high that the plastic at the internal corners of the carbon brush holder is melted and adhered to the carbon brush, which causes the reduction of life of both the carbon brush holder and the carbon brush.

### SUMMARY OF THE INVENTION

In order to solve the above problem, the embodiments of the present disclosure provide a carbon brush holder having internal surfaces which surround a space for bearing a carbon brush, wherein a heat dissipating slot is disposed at an internal corner of the carbon brush holder.

Optionally, a middle position of the internal surface of the carbon brush holder is in contact with the carbon brush.

Optionally, a heat dissipating slot is disposed at the ends of two opposite internal surfaces of the carbon brush holder, while no heat dissipating slot is disposed at the ends of the other two opposite internal surfaces of the carbon brush holder, such that part of each internal corner of the carbon brush holder is not in contact with the carbon brush.

Optionally, the ends of all the four internal surfaces of the carbon brush holder are provided with heat dissipating slots, such that each internal corner of the carbon brush holder is completely not in contact with the carbon brush.

Optionally, the heat dissipating slot has a cross section of square shape.

Optionally, the heat dissipating slot has a cross section of arrow shape.

The embodiments of the present disclosure further provides an electric motor comprising a carbon brush and the carbon brush holder provided in the above embodiments, the carbon brush holder being arranged on an end cap of the electric motor by injection molding.

Compared with the prior arts, the carbon brush holder and electric motor disclosed in the embodiments of the present disclosure at least have the following advantages: rapid dissipation of heat accumulated at the positions of the internal corners of the carbon brush holder because of the heat dissipating slots disposed at the internal corners, such that an excessively high temperature at the internal corners of the carbon brush holder is prevented and meanwhile a risk of melting the plastics at the internal corners of the carbon brush holder is reduced, thereby increasing the life of the carbon brush holder and the carbon brush.

### BRIEF DESCRIPTION OF THE DRAWINGS

FIG. 1 shows a sectional view of the carbon brush holder in prior art;
FIG. 2 is a perspective view of an end cap of the electric motor according to an embodiment of the present disclosure;
FIG. 3 is a sectional view of an end cap of the electric motor according to an embodiment of the present disclosure;
FIG. 4 is a sectional view of a carbon brush holder according to an embodiment of the present disclosure;
FIG. 5 is a sectional view of a carbon brush holder according to another embodiment of the present disclosure;
FIG. 6 is a sectional view of a carbon brush holder according to a further embodiment of the present disclosure;
FIG. 7 is a sectional view of a carbon brush holder according to yet another embodiment of the present disclosure.

### DETAILED DESCRIPTION OF THE EMBODIMENTS

A carbon brush holder and an electric motor according to an embodiment of the present disclosure are illustrated below with reference to the drawings, in which more details are depicted to help one skilled in the art to fully understand the present disclosure. However, it is apparent to one skilled in the art that the present disclosure may be carried out without some of the details. In addition, it should be understood that the present disclosure is not limited to the illustrated particular embodiments but on the contrary the present disclosure can be carried out by any combination of the following features and elements no matter whether they relate to different embodiments. Therefore, the aspects, features, embodiments and advantages below are only intended for illustration but shall not be taken as elements or limitations to the claims unless specified expressly in the claims.

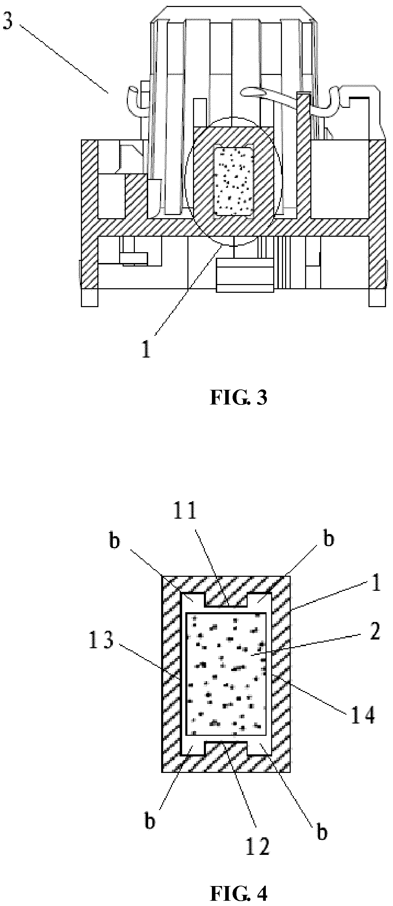

FIGS. 2 and 3 show a perspective view and a sectional view of an end cap of the electric motor according to an embodiment of the present disclosure, respectively. The carbon brush holder 1, as shown in FIGS. 2 and 3, is arranged on an end cap 3 of an electric motor by injection molding.

FIG. 4 shows a brush holder according to an embodiment of the present disclosure. As illustrated in FIG. 4, at the ends of two opposite internal surfaces 11, 12 (an upper internal surface and a lower internal surface in FIG. 4) of the carbon brush holder 1, heat dissipating slots *b* are provided; while at the ends of the other two opposite internal surfaces 13, 14 (a left internal surface and a right internal surface in FIG. 4), no heat dissipating slots are provided. Therefore, part of each internal corner of the carbon brush holder 1 is not in contact with the carbon brush 2. The middle of the internal surface of the carbon brush holder 1 is in contact with the carbon brush 2 to bear the carbon brush 2. The heat dissipating slots *b* shown in FIG. 4 have a square shape cross section. One skilled in the art may design the heat dissipating slots of other shapes as needed to dissipate heat. These variants do not depart from the protection scope of the present disclosure.

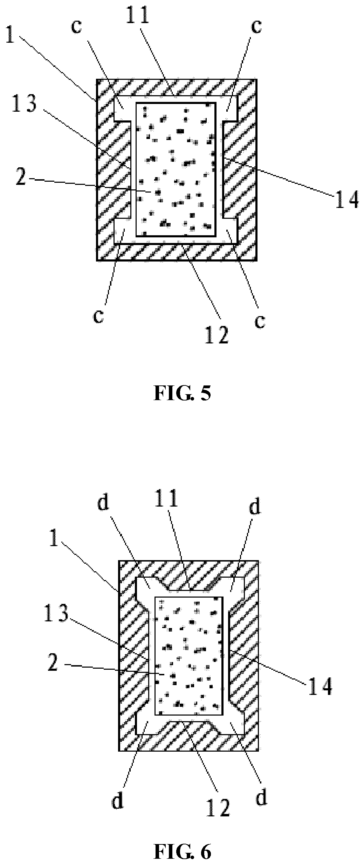

FIG. 5 shows a carbon brush holder according to another embodiment of the present disclosure. Unlike the embodiment of FIG. 4, the heat dissipating slots *c* in FIG. 5 are disposed at the ends of the left internal surface 13 and the right internal surface 14 of the carbon brush holder 1, but not at the ends of the upper internal surface 11 and the lower internal surface 12 thereof. The heat dissipating slots *c* illustrated in FIG. 5 has a square shape cross section. One skilled in the art may design the heat dissipating slots of other shapes as needed to dissipate heat. These variants do not depart from the protection scope of the present disclosure.

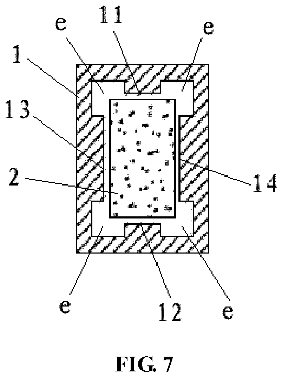

FIGS. 6 and 7 show a sectional view of a carbon brush holder according to a further embodiment and yet another embodiment of the present disclosure, respectively. As illustrated in FIGS. 6 and 7, all the ends of the four internal surfaces of the carbon brush holder 1 are provided with heat dissipating slots such that the four corners of the carbon brush holder 1 are completely not in contact with the carbon brush 2. That is to say, the four internal corners of the carbon brush holder 1 are provided with the heat dissipating slots which completely space the corners of the carbon brush 2 from the carbon brush holder 1. The middle of the internal surface of the carbon brush holder 1 is in contact with the carbon brush 2 to bear the carbon brush 2. Compared with the technical solutions of FIGS. 4 and 5 where the ends of only two opposite internal surfaces of the carbon brush holder are provided with the heat dissipating slots, the technical solutions of FIGS. 6 and 7 where the ends of four internal surfaces are provided with the heat dissipating slots can produce better heat dissipating effect.

FIGS. 6 and 7 show heat dissipating slots *d* and *e* of two different shapes, wherein the heat dissipating slot *d* in FIG. 6 has a cross section of arrow shape and the heat dissipating slot *e* in FIG. 7 has a cross section of square shape. One skilled in the art may design the heat dissipating slots of other shapes as needed to dissipate heat. These variants do not depart from the protection scope of the present disclosure.

In the embodiments of the present disclosure, heat accumulated at the internal corners of the carbon brush holder can be dissipated rapidly because of the heat dissipating slots disposed at the internal corners, such that an excessively high temperature at the internal corners of the carbon brush holder is prevented and a risk of melting the plastics at the internal corners of the carbon brush holder is reduced, thereby increasing the life of the carbon brush holder and the carbon brush.

The present disclosure is illustrated with the preferred embodiments, but not limited to this. Various modifications and variations made by any one skilled in the art without departing from the scope of the present disclosure shall be encompassed within the protection scope of the present disclosure. The protection scope of the present disclosure shall be defined by the claims.

## Claims

1. A carbon brush holder having internal surfaces which surround a space for bearing a carbon brush, **characterized in that** a heat dissipating slot is disposed at an internal corner of the carbon brush holder.

2. A carbon brush holder according to claim 1, **characterized in that** a middle position of the internal surface of the carbon brush holder is in contact with the carbon brush.

3. A carbon brush holder according to claim 1, **characterized in that** a heat dissipating slot is disposed at the ends of two opposite internal surfaces of the carbon brush holder, while no heat dissipating slot is disposed at the ends of the other two opposite internal surfaces of the carbon brush holder, such that part of each internal corner of the carbon brush holder is not in contact with the carbon brush.

4. A carbon brush holder according to claim 1, **characterized in that** the ends of all the four internal surfaces of the carbon brush holder are provided with heat dissipating slots, such that each internal corner of the carbon brush holder is completely not in contact with the carbon brush.

5. A carbon brush holder according to claim 1, **characterized in that** the heat dissipating slot has a cross section of square shape.

6. A carbon brush holder according to claim 1, **characterized in that** the heat dissipating slot has a cross section of arrow shape.

7. An electric motor comprising a carbon brush and the carbon brush holder according to any one of claims 1-6, the carbon brush holder being arranged on an end cap of the electric motor by injection molding.
